# FASCICULE DE BREVET EUROPEEN

(11) **EP 1 489 302 B1**
(45) Date de publication et mention de la délivrance du brevet: **15.03.2006**
(21) Numéro de dépôt: 04300324.3
(22) Date de dépôt: 14.06.2004
(51) Int. Cl.: F04B 9/04, F04B 1/04, B62M 19/00

(54) **Dispositif de pompe hydraulique basse pression à débit variable, notamment destiné à équiper une bicyclette à entrainement hydraulique**
Hydraulische Niederdruckpumpe mit veränderlicher Fördermenge, z.B. für ein hydraulisch angetriebenes Fahrrad
Variable capacity low pressure hydraulic pump, e.g. for a hydraulic driven bicycle

(30) Priorité: 17.06.2003 FR 0307264
(43) Date de publication de la demande: 22.12.2004
(73) Titulaire: Guittard, Jean-Yves, 39700 AMANGE (FR)
(72) Inventeur: Bertaux, Pascal, 34230 Vandemian (FR); Guittard, Jean-Yves, 39700 Amange (FR)
(74) Mandataire: Rhein, Alain

(56) Documents cités:
- FR-A- 1 014 803
- FR-A- 2 831 221
- GB-A- 2 130 305
- US-A- 4 684 143

## Description

La présente invention a pour objet un dispositif de pompe hydraulique basse pression à débit variable, notamment destiné à équiper une bicyclette à entraînement hydraulique.

On connaît déjà des bicyclettes à entraînement hydraulique, qui comportent une pompe hydraulique à débit variable comme c'est le cas par exemple dans les documents US 5.387.000 et FR 2.831.221, où le but est atteint en utilisant une ou plusieurs cames à géométrie variable agissant sur plusieurs pompes disposées radialement en étoile autour de ladite came qui est centrale, et comprenant chacune un piston mobile dans une chambre cylindrique et apte à être repoussé par le ou les bossages de ladite came qui est apte à être mue en rotation.

Dans le document FR 2.831.221 le retour du fluide hydraulique est réalisé au niveau du carter contenant la came, tandis que les pistons des pompes sont percés longitudinalement d'au moins un canal muni d'un clapet anti-retour apte à ne laisser passer le fluide que de l'espace contenant ladite came vers les chambres cylindriques des pompes lors de la remontée des pistons.

Les pompes décrites dans ces documents sont toutefois complexes à réaliser, et leur fiabilité dans le temps est limitée, ainsi celle du document US 5.387.000 brasse un volume variable de fluide, ce qui nécessite un réservoir tampon qui est ménagé dans les tubes du cadre, tandis que la came du dispositif du document FR 2.831.221 est difficile à mettre en oeuvre.

La présente invention a pour but de remédier aux divers inconvénients précités en proposant un dispositif de pompe hydraulique basse pression à débit variable, notamment destiné à équiper une bicyclette à entraînement hydraulique, dont la simplicité de conception lui assure une grande fiabilité.

Le dispositif de pompe hydraulique basse pression à débit variable notamment destiné à équiper une bicyclette à entraînement hydraulique selon l'invention est du type à plusieurs pompes disposées radialement en étoile, et comprenant chacune un piston apte à être repoussé dans une chambre cylindrique par le ou les bossages d'une came centrale à géométrie variable apte à être mue en rotation, et où le retour du fluide hydraulique est réalisé au niveau du carter contenant la came, tandis que les pistons des pompes sont percés longitudinalement d'au moins un canal muni d'un clapet anti-retour apte à ne laisser passer le fluide que de l'espace contenant ladite came vers les chambres cylindriques des pompes lors de la remontée des pistons, et il se caractérise essentiellement en ce que ladite came comporte plusieurs bossages, présente une forme conique et est mobile axialement par rapport auxdites pompes, et en ce que ces dernières sont chacune d'axe sensiblement perpendiculaire à la surface conique moyenne de ladite came.

Selon une caractéristique additionnelle du dispositif selon l'invention, la came est de forme générale tronconique, son petit côté présentant un profil circulaire tandis que son grand côté présente un profil bosselé, la paroi périphérique permettant de faire la transition d'un profil à l'autre de manière progressive.

Selon une autre caractéristique additionnelle du dispositif selon l'invention, chaque bossage présente un profil asymétrique, la pente d'attaque du piston étant plus grande que celle de fuite.

Selon une autre caractéristique additionnelle du dispositif selon l'invention, les pompes sont réparties angulairement de manière régulière, de même que les bossages, le nombre de bossages étant différent de celui des pompes.

De préférence le nombre de pompes n'est pas un multiple du nombre de bossages de la came, cette caractéristique permettant d'éviter les risques de fonctionnement en phase des différentes pompes.

Dans un mode de réalisation particulier, la came comporte cinq bossages pour une série de six pompes, on obtient ainsi une grande linéarité de sortie du fluide.

Selon une autre caractéristique additionnelle du dispositif selon l'invention, les pompes sont de volumes différents, le volume desdites pompes étant fonction de leur emplacement par rapport au moyen d'entraînement de la came.

Dans le cas d'une bicyclette, on sait que la puissance maximum est transmise lorsque les biellettes du pédalier sont en phase descendante et à l'approche de l'horizontale, aussi, il est prévu que les pompes, qui sont actionnées lorsque lesdites biellettes sont chacune dans la position précitée, soient d'une cylindrée plus importante.

Selon une autre caractéristique additionnelle du dispositif selon l'invention, le circuit comporte un système de gavage comprenant au moins une chambre contenant de l'azote pressurisé.

En fonctionnement, le rappel des pistons permettant d'effectuer le remplissage des cylindres est assuré par la seule tendance du fluide à envahir toute amorce de création de vide du fait du gavage en pression du circuit. Par contre à vitesse de rotation nulle le blocage hydrostatique propre au système empêche le déplacement des pistons, aussi, il est nécessaire, soit de rappeler élastiquement les pistons au moyen de ressorts, soit de réaliser une liaison entre les pistons et la came par l'intermédiaire de moyens magnétiques permettant d'amorcer le mouvement.

De manière avantageuse, lorsque le rappel est réalisé au moyen de ressorts, ceux-ci sont également aptes à manoeuvrer les soupapes anti-retour des pistons.

Selon un mode de réalisation particulier du dispositif selon l'invention, il comporte deux cames coaxiales disposées tête-bêche, et aptes être déplacées en rapprochement ou en éloignement l'une de l'autre, et associées chacune à une série de pompes radiales.

Selon une caractéristique additionnelle du mode de réalisation particulier du dispositif selon l'invention, les deux séries de pompes sont imbriquées l'une dans l'autre en étant décalées angulairement l'une par rapport à l'autre.

Selon une caractéristique additionnelle du mode de réalisation particulier du dispositif selon l'invention, les deux cames sont montées en libre déplacement longitudinal sur un arbre et sont liées chacune à un disque coaxial dont le bord est engagé, en vue de guidage, dans le filetage d'au moins une vis apte à être mue en rotation afin d'assurer le déplacement desdites cames.

Selon une autre caractéristique additionnelle du dispositif selon l'invention, la ou les vis sont mues en rotation au moyen d'une vis qui s'y engrène latéralement.

Selon une autre caractéristique additionnelle du dispositif selon l'invention, les deux disques coopèrent chacun avec l'un de deux filetages de pas de sens contraires que comporte une vis apte à être mue en rotation.

Selon une variante du dispositif selon l'invention, la ou les vis sont inclinées en sorte que les filets soient sensiblement parallèles au plan du disque.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé :
- la figure 1 représente une vue schématique partielle en élévation d'un dispositif de pompe selon l'invention.
- la figure 2 représente une vue schématique en perspective d'une partie de ce même dispositif.
- la figure 3 représente une vue schématique en perspective d'une autre partie de ce même dispositif.
- la figure 4 représente une vue schématique partielle en perspective d'un mode de réalisation particulier du dispositif de pompe selon l'invention.
- la figure 5 représente une vue schématique d'une partie du même dispositif.
- la figure 6 représente une vue schématique d'une variante de la même partie de ce dispositif.
- la figure 7 représente une vue schématique en coupe d'un mode de réalisation particulier d'une partie du dispositif de pompe selon l'invention.

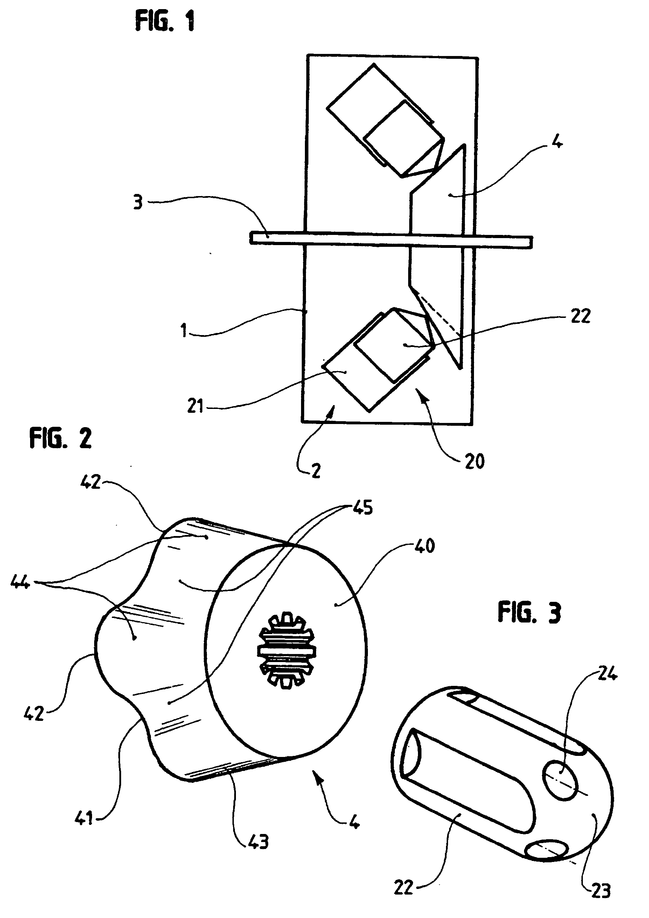

En référence à la figure 1, on peut voir un dispositif de pompe hydraulique basse pression pour bicyclette selon l'invention.

Ce dispositif comporte un carter 1 renfermant une série 2 de pompes 20 réparties radialement en étoile, coaxialement à un arbre 3 portant une came 4 représentée sur la figure 2.

La came 4 présente une forme générale tronconique dont le petit côté 40 est circulaire, tandis que le grand côté 41 présente une succession régulière de bosses 42, la paroi périphérique 43 présentant un profil permettant la transition du petit côté 40 au grand côté 41 de manière progressive, ce qui crée une succession de bossages 44 et de creux 45, dont le dénivelé augmente du petit côté 40 vers le grand côté 41.

On notera que les bossages 44 peuvent être de pentes soit symétriques soit asymétriques.

La came 4 comporte par ailleurs un orifice central 46 crénelé apte à coopérer avec l'arbre 3 qui est crénelé de manière correspondante, en sorte que la came 4 et l'arbre 3 soient liés en rotation mais que la came 4 puisse être déplacée longitudinalement sur l'arbre 3.

Les pompes 20 comprennent chacune une chambre cylindrique 21 connectée à un circuit, non représenté, de circulation de fluide. Les pompes 20 sont d'axe perpendiculaire à la surface conique moyenne de la came 4 ce qui favorise la transmission de mouvement et limite les problèmes d'usure.

La pompe comporte un piston 22, également représenté sur la figure 3, apte à se déplacer longitudinalement en va-et-vient dans la chambre 21 en étant repoussé par les bossages 44 de la came 4.

Le contact entre la paroi 43 de la came 4 et le piston 22 est réalisé au niveau de l'extrémité arrière 23 de ce dernier, laquelle présente un profil arrondi, en sorte que le contact est ponctuel.

On notera que la circulation du fluide est analogue à celle du document FR 2.831.221, c'est-à-dire que le volume de fluide est constant, et que le remplissage des chambres est réalisé à travers les pistons 22 qui sont percés longitudinalement de canaux 24 munis chacun d'une soupape anti-retour, non représentée.

Comme cela a déjà été évoqué, en fonctionnement le rappel des pistons 22 est réalisé automatiquement, par contre il est nécessaire de vaincre l'inertie initiale lors du démarrage, aussi il est prévu soit d'équiper les chambres 21 de ressorts aptes à repousser les pistons 22 vers la came 4, soit d'utiliser des moyens magnétiques aptes à lier les pistons 22 à la came 4.

Dans le cas d'une liaison magnétique, et d'un système de gavage du circuit, la came 4 comporte au niveau de chacun des bossages, parallèlement à la surface externe, à proximité du sommet du bossage, légèrement décalé du côté du front descendant, un évidement longitudinal dans lequel est introduit un barreau magnétique, tandis que les pistons 22 sont matériaux ferreux. On notera qu'il est également possible d'envisager une magnétisation complète de la came.

On comprendra que le déplacement de la came 4 sur l'arbre 3 permet de mettre en regard de la partie arrière 23 des pistons 22 des zones différentes de la came, qui diffèrent par la différence de dénivelé entre les creux 45 et les bossages 44, en sorte d'obtenir un débit de fluide différent à vitesse de rotation égale.

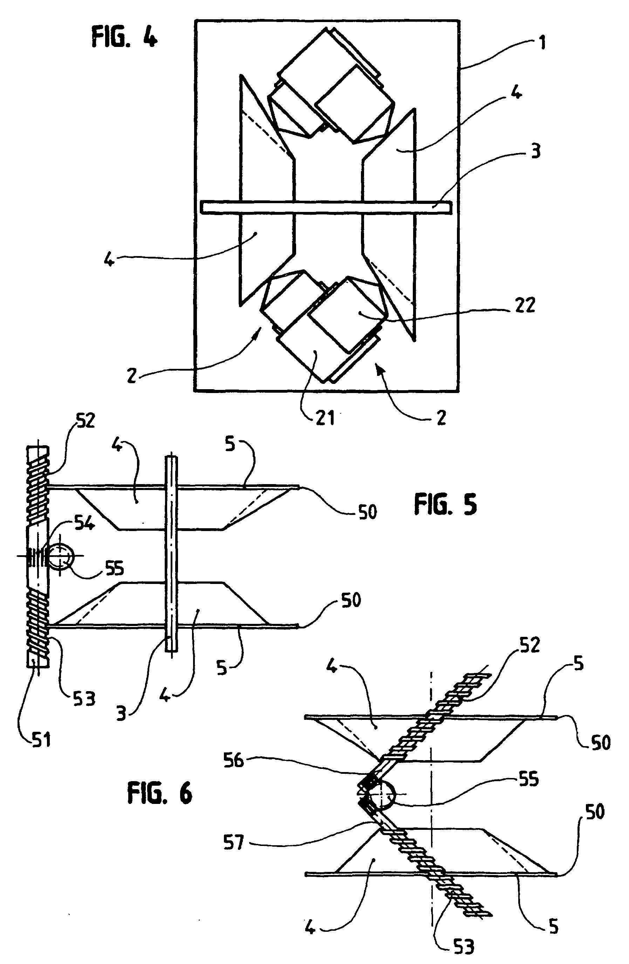

En référence maintenant à la figure 4, on peut voir un mode de réalisation particulier du dispositif de pompe selon l'invention, où le carter 1 renferme deux cames 4 disposées tête-bêche sur un même arbre 3, et associées à deux séries 2 de pompes 20 imbriquées l'une dans l'autre par le biais d'un décalage angulaire, ce qui autorise un gain important de place.

La rotation de l'arbre 3 entraîne donc simultanément les deux cames 4 qui elles-mêmes agissent sur les pistons 21 des deux séries 2 de pompes 20.

Dans le cas d'un dispositif de pompe hydraulique pour bicyclette, chacune des séries 2 de pompes 20 est dédiée à l'entraînement d'une roue de cette dernière. L'admission de fluide est centrale et commune, par contre l'échappement est dédoublé afin d'obtenir deux circuits pressurisés distincts, un pour chacune des roues, ce qui assure une fonction de blocage de différentiel de type inter-pont entre les deux roues, tout en permettant de reporter le couple sur la roue disposant de la plus forte adhérence.

On notera que cette caractéristique permet d'envisager de monter des pentes plus aisément qu'avec des bicyclettes classiques.

En référence à la figure 5, on peut voir le système permettant de déplacer simultanément sur l'arbre 3, en rapprochement ou en éloignement l'une de l'autre, les deux cames 4. A cet effet chacune des cames 4 est liée à un disque 5 dont le bord 50 s'engrène sur une vis transversale 51 parallèle à l'arbre 3, en sorte que la rotation de la vis 51 engendre, à la manière d'un système vis-écrou, le déplacement du disque 5 et donc de la came 4 qui lui est liée.

Dans le mode de réalisation représenté, la vis 51 comporte deux filetages 52 et 53 de pas de sens différents, un à chacune de ses extrémités, et les disques 5 des cames 4 s'engrènent chacun sur l'un des filetages 52 et 53 en sorte que la rotation de la vis 51, qui est réalisée à volonté depuis l'extérieur du carter par au moyen d'une vis 55 s'engrenant sur un filetage 54 de la vis 51, entraîne, selon le sens de rotation, le rapprochement ou l'éloignement l'une de l'autre des cames 4.

On notera que de préférence, afin d'éviter des problèmes de porte-à-faux, on utilise deux vis 51, par exemple opposées diamétralement par rapport à l'arbre 3, commandées par une même vis 55 qui est alors disposée en sorte de croiser à distance l'arbre 3.

En référence maintenant à la figure 6, on peut voir une variante du dispositif tels que représenté sur la figure 5. Cette variante a notamment pour but d'éviter les problèmes de frottement et d'usure des bords 50 des disques 5 au contact de la vis 51. En effet, en fonctionnement les disques 5 sont en rotation et au contact de la vis 51, ce qui engendre, du fait des frottements, un échauffement et une usure. Le mode de réalisation représenté à la figure 8 a pour but de limiter ces phénomènes.

A cet effet, on utilise deux vis 56 et 57 comportant chacune un filetage, respectivement 52 et 53, et faisant chacune un angle, de préférence correspondant à celui du filetage, avec le disque 5 avec lequel elle coopère. Ainsi, les bords 50 des disques 5 subissent moins de contraintes.

De même que pour le mode de réalisation précédent, les vis 56 et 57 peuvent être doublées, de l'autre côté des disques 5, tout en conservant une seule vis 55 de commande.

Outre la résolution des problèmes de frottement, ce mode de réalisation offre des avantages du point de vue construction, puisqu'il permet de déporter vers l'extérieur du carter les moyens de commandes que sont les vis 55, 56 et 57.

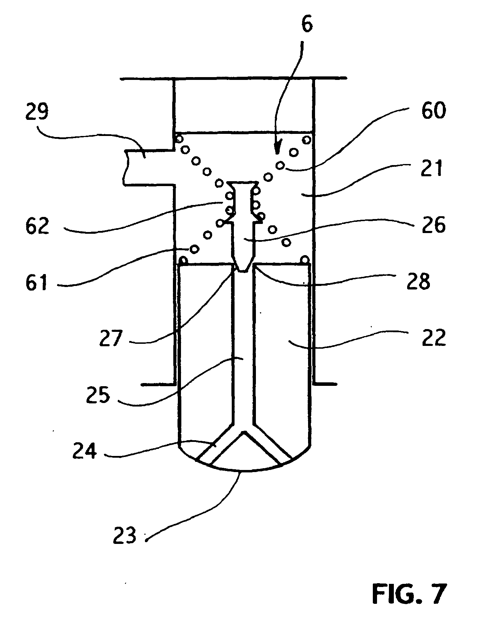

En référence maintenant à la figure 7 on peut voir une vue en coupe selon un plan longitudinal médian d'une pompe 20 particulière. Cette pompe 20 comporte une chambre cylindrique 21 dans laquelle peut se déplacer un piston 22, lequel est percé axialement d'un canal 25 se ramifiant du côté arrière 23 en canaux 24, et qui est destiné à permettre le remplissage de la chambre cylindrique lors du retour du piston 22.

Le canal 25 est associé à la soupape 26 d'un clapet anti-retour qui est apte à boucher le canal 25 lorsque le piston 22 est repoussé par la came 4, non représentée. Un ressort 6 est disposé dans la chambre cylindrique 21 pour faciliter le rappel du piston 22.

De manière avantageuse, le ressort 6 est en forme de diabolo, il comporte deux parties coniques 60 et 61 opposées, la base de la partie 60 reposant sur le fond de la chambre cylindrique 21, tandis que la base de la partie 61 est accolée au piston 22, et que la zone 62 de jonction des deux parties 60 et 61 est conformée pour maintenir la soupape 26 dont l'extrémité conique 27 est destinée à coopérer avec l'orifice 28 du canal 25 au gré du déplacement du piston 22.

Ainsi, lorsque le piston 22 est repoussé dans la chambre cylindrique 21, la soupape 26 ferme le canal 25, ce qui permet de refouler le fluide contenu dans la chambre cylindrique 21 dans un conduit 29, lui-même équipé d'un clapet anti-retour non représenté, de type à bille par exemple.

On notera qu'il peut être avantageux que les parties coniques 60 et 61 du ressort 6 soient d'élasticités différentes afin de piloter de manière efficace le déplacement de la soupape 26.

## Revendications

1. Dispositif de pompe hydraulique basse pression à débit variable du type à plusieurs pompes (20) disposées radialement en étoile, et comprenant chacune un piston (22) apte à être repoussé dans une chambre cylindrique (21) par le ou les bossages (44) d'une came (4) centrale à géométrie variable apte à être mue en rotation, et où le retour du fluide hydraulique est réalisé au niveau du carter (1) contenant la came (4), tandis que les pistons (22) des pompes (20) sont percés longitudinalement d'au moins un canal (25) muni d'un clapet anti-retour apte à ne laisser passer le fluide que de l'espace contenant ladite came (4) vers les chambres cylindriques (21) des pompes (20) lors de la remontée des pistons (22), **caractérisé en ce que** ladite came (4) comporte plusieurs bossages (44), présente une forme conique et est mobile axialement par rapport auxdites pompes (20), et **en ce que** ces dernières sont chacune d'axe sensiblement perpendiculaire à la surface conique moyenne de ladite came (4).

2. Dispositif selon la revendication 1, **caractérisé en ce que** la came (4) est de forme générale tronconique, son petit côté (40) présentant un profil circulaire tandis que son grand côté (41) présente un profil bosselé, la paroi périphérique (43) permettant de faire la transition d'un profil à l'autre de manière progressive.

3. Dispositif selon la revendication 1 ou la revendication 2, **caractérisé en ce que** chaque bossage présente un profil asymétrique, la pente d'attaque du piston étant plus grande que celle de fuite.

4. Dispositif selon l'une quelconque des revendications précédentes, **caractérisé en ce que** les pompes (20) sont réparties angulairement de manière régulière, de même que les bossages (44), le nombre de bossages (44) étant différent de celui des pompes (20).

5. Dispositif selon la revendication 4, **caractérisé en ce que** la came (4) comporte cinq bossages (44) pour une série (2) de six pompes (20).

6. Dispositif selon l'une quelconque des revendications précédentes, **caractérisé en ce que** les pompes (20) sont de volumes différents, le volume desdites pompes (20) étant fonction de leur emplacement par rapport au moyen d'entraînement de la came (4).

7. Dispositif selon l'une quelconque des revendications précédentes, **caractérisé en ce que** le circuit comporte un système de gavage comprenant au moins une chambre contenant de l'azote pressurisé.

8. Dispositif selon l'une quelconque des revendications précédentes, **caractérisé en ce que** les pistons (22) sont rappelés par des moyens élastiques (6) repoussant lesdits pistons (22) vers la came (4).

9. Dispositif selon la revendication 8, **caractérisé en ce que** les moyens élastiques (6) sont également aptes à manoeuvrer le clapet anti-retour (26).

10. Dispositif selon la revendication 9, **caractérisé en ce que** les moyens élastiques (6) consistent chacun en un ressort en forme de diabolo dont le rétrécissement (62) est conformé pour maintenir le clapet (26) qui est apte à fermer le canal (25) qui traverse le piston (22) lorsque ce dernier est repoussé par la came (4).

11. Dispositif selon la revendication 7, **caractérisé en ce que** les pistons (22) sont liés à la came (4) par l'intermédiaire de moyens magnétiques.

12. Dispositif selon l'une quelconque des revendications précédentes, **caractérisé en ce qu'**il comporte deux cames (4) coaxiales disposées tête-bêche, et aptes être déplacées en rapprochement ou en éloignement l'une de l'autre, et associées chacune à une série (2) de pompes radiales (20).

13. Dispositif selon la revendication 11, **caractérisé en ce que** les deux séries (2) de pompes (20) sont imbriquées l'une dans l'autre en étant décalées angulairement l'une par rapport à l'autre.

14. Dispositif selon la revendication 12 ou la revendication 13, **caractérisé en ce que** les deux cames (4) sont montées en libre déplacement longitudinal sur un arbre (3) et sont liées chacune à un disque coaxial (5) dont le bord (50) est engagé, en vue de guidage, dans le filetage (52, 53) d'au moins une vis (51 ; 56, 57) apte à être mue en rotation afin d'assurer le déplacement desdites cames (4).

15. Dispositif selon la revendication 14, **caractérisé en ce que** la ou les vis (51 ; 56, 57) sont mues en rotation au moyen d'une vis (55) qui s'y engrène latéralement.

16. Dispositif selon la revendication 14 ou la revendication 15, **caractérisé en ce que** les deux disques (5) coopèrent chacun avec l'un de deux filetages (53, 53) de pas de sens contraires que comporte une vis (51) apte à être mue en rotation.

17. Dispositif selon la revendication 14 ou la revendication 15, **caractérisé en ce que** la ou les vis (56, 57) sont inclinées en sorte que les filets soient sensiblement parallèles au plan du disque (5).

## Patentansprüche

1. Hydraulische Niederdruckpumpenvorrichtung mit veränderlicher Fördermenge der Art mit mehreren Sternpumpen (20), die jeweils einen Kolben (22) umfassen, der geeignet ist, um durch den oder die Buckel (44) eines zentralen Nockens (4) mit veränderlicher Geometrie, geeignet, um in Drehung bewogen zu werden, in einen zylindrischen Raum (21) zurückgeschoben zu werden, und wo die Rückführung der hydraulischen Flüssigkeit im Bereich des Gehäuses (1) erfolgt, das den Nocken (4) enthält, während die Kolben (22) der Pumpen (20) der Länge nach von wenigstens einem Kanal (25) durchbohrt sind, der mit einem Rückschlagventil ausgestattet ist, geeignet, um die Flüssigkeit nur vom dem Raum, der den besagten Nocken (4) enthält, in Richtung der zylindrischen Räume (21) der Pumpen (20) bei dem Wiederaufstieg der Kolben (22) übergehen zu lassen, **dadurch gekennzeichnet, daß** der besagte Nocken (4) mehrere Buckel (44) umfaßt, eine konische Form aufweist und hinsichtlich der besagten Pumpen (20) axial beweglich ist, und daß diese Letzteren jeweils eine Achse haben, die zu der durchschnittlichen konischen Oberfläche des besagten Nockens (4) im wesentlichen senkrecht ist.

2. Vorrichtung nach Anspruch 1, **dadurch gekennzeichnet, daß** der Nocken (4) eine kegelstumpfartige Allgemeinform hat, wobei seine kleine Seite (40) ein Kreisprofil aufweist, während seine große Seite (41) ein verbeultes Profil aufweist, wobei die Umkreiswand (43) erlaubt, den Übergang vom einen Profil zum anderen allmählich zu machen.

3. Vorrichtung nach Anspruch 1 oder Anspruch 2, **dadurch gekennzeichnet, daß** jeder Buckel ein asymmetrisches Profil aufweist, wobei das führende Gefälle des Kolbens größer ist als das ausgehende.

4. Vorrichtung nach irgendeinem der vorgehenden Ansprüche, **dadurch gekennzeichnet, daß** die Pumpen (20) winklig regelmäßig angeordnet sind, ebenso wie die Buckel (44), wobei die Anzahl der Buckel (44) von jener der Pumpen (20) verschieden sei.

5. Vorrichtung nach Anspruch 4, **dadurch gekennzeichnet, daß** der Nocken (4) fünf Buckel (44) für eine Reihenfolge (2) von sechs Pumpen (20) umfaßt.

6. Vorrichtung nach irgendeinem der vorgehenden Ansprüche, **dadurch gekennzeichnet, daß** die Pumpen (20) unterschiedliche Volumina haben, wobei das Volumen der besagten Pumpen (20) von ihrer Lage hinsichtlich des Nockenantriebsmittels(4) anhängig sei.

7. Vorrichtung nach irgendeinem der vorgehenden Ansprüche, **dadurch gekennzeichnet, daß** der Kreislauf ein Drucksystem umfaßt, enthaltend wenigstens einen Raum, der Druckstickstoff enthält.

8. Vorrichtung nach irgendeinem der vorgehenden Ansprüche, **dadurch gekennzeichnet, daß** die Kolben (22) durch elastische Mittel (6) zurückgestellt werden, die die besagten Kolben (22) in Richtung des Nockens (4) zurückschieben.

9. Vorrichtung nach Anspruch 8, **dadurch gekennzeichnet, daß** die elastischen Mittel (6) ebenfalls geeignet sind, um das Rückschlagventil (26) zu betätigen.

10. Vorrichtung nach Anspruch 9, **dadurch gekennzeichnet, daß** die elastischen Mittel (6) jeweils aus einer Rollenfeder bestehen, deren Verengung (62) gebildet ist, um das Klappenventil (26) zu halten, das geeignet geformt ist, um den Kanal (25), der den Kolben (22) durchquert, zu schließen, wenn dieser letztere durch den Nocken (4) zurückgeschoben ist.

11. Vorrichtung nach Anspruch 7, **dadurch gekennzeichnet, daß** die Kolben (22) mit dem Nocken (4) über Magnetmittel verbunden sind.

12. Vorrichtung nach irgendeinem der vorgehenden Ansprüche, **dadurch gekennzeichnet, daß** sie zwei koaxiale Nocken (4) umfaßt, angeordnet Kopf bei Fuß und geeignet, um einander angenähert oder voneinander entfernt zu werden, und die jeweils einer Reihe (2) von radialen Pumpen (20) zugeordnet sind,

13. Vorrichtung nach Anspruch 11, **dadurch gekennzeichnet, daß** die beiden Reihen (2) von Pumpen (20) schuppenartig angeordnet sind, wobei sie hinsichtlich einander winklig verschoben seien.

14. Vorrichtung nach Anspruch 12 oder Anspruch 13, **dadurch gekennzeichnet, daß** die beiden Nocken (4) in freier Längsverschiebung auf einer Welle (3) montiert sind und jeweils mit einer koaxialen Scheibe (5) verbunden sind, deren Rand (50) angesichts der Führung im Gewinde (52, 53) von wenigstens einer Schraube (51; 56, 57) eingreift, die geeignet ist, in Drehung bewogen zu werden, um die Bewegung der besagten Nocken (4) zu sichern.

15. Vorrichtung nach Anspruch 14, **dadurch gekennzeichnet, daß** die Schraube oder Schrauben (51; 56, 57) mit Hilfe einer Schraube (55) in Drehung bewogen werden, die sich da seitlich verzahnt.

16. Vorrichtung nach Anspruch 14 oder Anspruch 15, **dadurch gekennzeichnet, daß** die beiden Scheiben (5) jeweils mit einem von beiden Gewinden (53, 53) mit einer Steigungshöhe in entgegengesetzten Richtungen zusammenwirken, die eine Schraube (51) umfaßt, geeignet, um in Drehung bewogen zu werden.

17. Vorrichtung nach Anspruch 14 oder Anspruch 15, **dadurch gekennzeichnet, daß** die Schraube oder Schrauben (56, 57) geneigt sind, derart, daß die Gewinde im wesentlichen parallel zu der Ebene der Scheibe (5) sind.

## Claims

1. Variable-capacity low-pressure hydraulic pump device of the type with several radial pumps (20) each comprising a piston (22) capable of being pushed back into a cylindrical chamber (21) by the boss or bosses (44) of a variable-geometry central cam (4) capable of being driven in rotation, and in which the return of the hydraulic fluid occurs at the level of the casing (1) containing the cam (4), whereas the pistons (22) of the pumps (20) are longitudinally drilled with at least one channel (25) provided with a non-return valve capable of letting the fluid flow only from the space containing said cam (4) into the cylindrical chambers (21) of the pumps (20) when the pistons (22) are raising, **characterised in that** said cam (4) includes several bosses (44), has a conical shape and is axially movable with respect to said pumps (20), and **in that** the latter have an axis substantially perpendicular to the mean conical surface of said cam (4).

2. Device according to claim 1, **characterised in that** the cam (4) has a truncated general shape, its small side (40) having a circular profile, whereas its large side (41) has a corrugated profile, the peripheral wall (43) allowing progressively the transition from one profile to the other profile.

3. Device according to claim 1 or to claim 2, **characterised in that** each boss has an asymmetrical profile, the leading slope of the piston being larger than the trailing one.

4. Device according to any of the preceding claims, **characterised in that** the pumps (20) are regularly angularly distributed, as well as the bosses (44), the number of bosses (44) being different from that of the pumps (20).

5. Device according to claim 4, **characterised in that** the cam (4) includes five bosses (44) for a series (2) of six pumps (20).

6. Device according to any of the preceding claims, **characterised in that** the pumps (20) have different volumes, the volume of said pumps (20) depending on their location with respect to the cam driving means (4).

7. Device according to any of the preceding claims, **characterised in that** the circuit includes a feeding system comprising at least one chamber containing nitrogen under pressure.

8. Device according to any of the preceding claims, **characterised in that** the pistons (22) are restored by springy means (6) pushing back said pistons (22) towards the cam (4).

9. Device according to claim 8, **characterised in that** the springy means (6) are also capable of actuating the non-return valve (26).

10. Device according to claim 9, **characterised in that** the springy means (6) each consist of a bobbin-shaped spring the narrowing (62) of which is conformed so as to maintain the valve (26) which is capable of closing the channel (25) passing through the piston (22) when the latter is pushed back by the cam (4).

11. Device according to claim 7, **characterised in that** the pistons (22) are connected to the cam (4) through magnetic means.

12. Device according to any of the preceding claims, **characterised in that** it includes two coaxial cams (4) arranged head to foot, and capable of being moved close to each other or away from each other, and each associated with a series (2) of radial pumps (20),

13. Device according to claim 11, **characterised in that** the two series (2) of pumps (20) are nested into each other while being angularly offset from each other.

14. Device according to claim 12 or claim 13, **characterised in that** the two cams (4) are mounted freely movable longitudinally on a shaft (3) and are each connected to a coaxial disc (5) the edge (50) of which is inserted, with a view to its guiding, into the thread (52, 53) of at least one screw (51 ; 56, 57) capable of being driven in rotation in order to ensure the displacement of said cams (4).

15. Device according to claim 14, **characterised in that** the screw or screws (51; 56, 57) are driven in rotation by means of a screw (55) which laterally meshes with same.

16. Device according to claim 14 or claim 15, **characterised in that** the two discs (5) each co-operate with one of two threads (53, 53) with a pitch in opposite direction a screw (51) capable of being driven in rotation includes.

17. Device according to claim 14 or claim 15, **characterised in that** the screw or screws (56, 57) are so inclined that the threads are substantially parallel to the plane of the disc (5).
